# EUROPEAN PATENT SPECIFICATION

(11) **EP 4 451 683 B1**
(45) Date of publication and mention of the grant of the patent: **13.05.2026**
(21) Application number: 23739905.0
(22) Date of filing: 06.01.2023
(51) Int. Cl.: H04N 21/239, G06F 3/0483, G06F 3/0485, G06F 3/04883, G06F 16/738, H04N 21/431, H04N 21/482

(54) **VIDEO SEARCH METHOD AND APPARATUS, DEVICE, STORAGE MEDIUM AND PROGRAM PRODUCT**
VIDEOSUCHVERFAHREN UND -VORRICHTUNG, VORRICHTUNG, SPEICHERMEDIUM UND PROGRAMMPRODUKT
PROCÉDÉ ET APPAREIL DE RECHERCHE VIDÉO, DISPOSITIF, SUPPORT DE STOCKAGE ET PRODUIT-PROGRAMME

(30) Priority: 14.01.2022 CN 202210043475
(43) Date of publication of application: 23.10.2024
(73) Proprietor: Beijing Zitiao Network Technology Co., Ltd., Beijing 100190 (CN)
(72) Inventor: CHEN, Zhigao, Beijing 100086 (CN); YU, Xiaomeng, Beijing 100086 (CN); LI, Rui, Beijing 100086 (CN); ZHOU, Junjie, Beijing 100086 (CN); JIANG, Hongbin, Beijing 100086 (CN); TENG, Zhen, Beijing 100086 (CN)
(74) Representative: Marks & Clerk LLP
(86) International application number: PCT/CN2023/070902
(87) International publication number: WO 2023/134562

(56) References cited:
- CN-A- 108 959 320
- CN-A- 111 143 610
- CN-A- 111 405 318
- CN-A- 112 423 138
- CN-A- 113 111 286
- CN-A- 113 158 004
- CN-A- 113 536 136
- CN-A- 113 891 164
- US-A1- 2014 372 889
- US-A1- 2024 176 830
- US-A1- 2024 406 488
- US-B1- 8 750 682

## Description

### TECHNICAL FIELD

The present disclosure relates to the technical field of computer technology, and in particular to a video search method and apparatus, a device and a program product.

### BACKGROUND

When users watch videos using a terminal device, generally, a keyword is entered in a search area, and then the terminal device displays search results below the search area for the users to select. The users need to select the video to be watched from the search results, in order to enter the playing page of the selected video to watch, and at this time, no other search results can be displayed on the playing page. In addition, when the users want to watch another video in the search result, they need to return to the search result page to make a new selection, so if the users want to watch a plurality of videos in the search result, they need to continuously repeat multiple times the process of returning to the search result from the playing page and then making a selection.

CN 113158004A relates to a data search processing method, and the method comprises the steps of: receiving a search request, wherein the search request comprises entity keywords belonging to a target category; obtaining dimension information of at least two dimensions corresponding to the target category and a multimedia resource set of the entity keyword under each dimension, and displaying a search result page, wherein the search result page comprises a first area and a second area, the dimension information of the at least two dimensions is displayed in the first area, the second area comprises a plurality of preset sub-areas, and multimedia resource sets under the dimensions corresponding to the preset sub-areas are displayed in the preset sub-areas.

### SUMMARY

In a first aspect of the present disclosure, a video search method is provided, comprising:
acquiring a first search result about video search information, wherein the first search result comprises a plurality of videos;
playing a first video in the first search result in a first area of a first display interface, and displaying the first search result in a second area displayed on the first interface, wherein videos in the first search result are automatically played in the first area sequentially; and
in response to a first trigger operation for the first area, playing a second video in the first search result in the first area, wherein the second video is a video in the plurality of videos that is adjacent to the first video. In a second aspect of the present disclosure, an electronic device is provided, comprising a memory, a processor, and a computer program stored in the memory and executable by the processor, wherein the processor, when executing the computer program, implements the method as described in the first aspect in conjunction with a display.

In a third aspect of the present disclosure, a non-transitory computer-readable storage medium is provided that stores computer instructions for causing a computer to perform the method as described in the first aspect.

In a fourth aspect of the present disclosure, a computer program product is provided, comprising computer program instructions which, when executed on a computer, cause the computer to perform the method as described in the first aspect.

### BRIEF DESCRIPTION OF THE DRAWINGS

In order to more clearly illustrate the technical solutions in the present disclosure or related art, the drawings required for use in the description of embodiments or related art will be briefly introduced below. Obviously, the drawings in the following description are only embodiments of the present disclosure. Based on these drawings, other drawings can be obtained by those skilled in the art without creative efforts.
FIG. 1A shows a schematic diagram of search results of a video search.
FIG. 1B shows a schematic diagram of a video playing page.
FIG. 2A shows a schematic diagram of search results of a video search.
FIG. 2B shows a schematic diagram of a video playing page.
FIG. 3 shows a schematic diagram of a video search architecture according to an embodiment of the present disclosure.
FIG. 4 shows a schematic hardware structure diagram of an exemplary electronic device provided in an embodiment of the present disclosure.
FIG. 5 shows a schematic diagram of an initial search interface according to an embodiment of the present disclosure.
FIG. 6 shows a schematic diagram of an input interface of video search information according to an embodiment of the present disclosure.
FIG. 7A shows a schematic diagram of a search result interface according to an embodiment of the present disclosure.
FIG. 7B shows a schematic diagram of video switching according to an embodiment of the present disclosure.
FIG. 7C shows a schematic diagram of video switching according to an embodiment of the present disclosure.
FIG. 8A shows a schematic diagram of a comment interface according to an embodiment of the present disclosure.
FIG. 8B shows a schematic diagram of a comment interface according to an embodiment of the present disclosure.
FIG. 9 shows a schematic diagram of a full-screen display interface according to an embodiment of the present disclosure.
FIG. 10 shows a schematic diagram of a play control display interface according to an embodiment of the present disclosure.
FIG. 11 shows a schematic diagram of a publisher's video interface according to an embodiment of the present disclosure.
FIG. 12 shows a schematic diagram of a second tag display interface according to an embodiment of the present disclosure.
FIG. 13 is a schematic flow chart of a video search method according to an embodiment of the present disclosure.
FIG. 14 shows a schematic diagram of a video search apparatus according to an embodiment of the present disclosure.

### BRIEF DESCRIPTION OF THE DRAWINGS

In order to make the objectives, technical solutions and advantages of the present disclosure more apparent, the present disclosure is further described in detail below in connection with specific embodiments and with reference to the accompanying drawings.

It should be noted that, unless otherwise defined, technical or scientific terms used in the embodiments of the present disclosure should have the general meaning understood by persons of ordinary skills in the field to which the present disclosure belongs. The terms "first", "second", and the like as used in the embodiments of the present disclosure do not indicate any order, quantity or importance, but are only used to distinguish different components. The words "including" or "comprising" and the like are intended to mean that the element or article preceding the word encompasses the elements or articles listed after the word and their equivalents, but do not exclude other elements or articles. Words such as "connected" or "coupled" are not limited to physical or mechanical connections, but may include electrical connections, whether direct or indirect. "Up", "down", "left", "right", etc. are only used to indicate relative positional relationships. When the absolute position of the object being described is changed, the relative position relationship may also be changed accordingly.

In the related art, operations are frequently repeated, so that on one hand, the efficiency of watching search results by a user is reduced; on the other hand, the user cannot watch video search results continuously, resulting in poor continuity of video consumption and reduced user experience. In view of this, the present disclosure proposes a video search method and apparatus, a device and a program product to enable the user to watch the video search results continuously and smoothly.

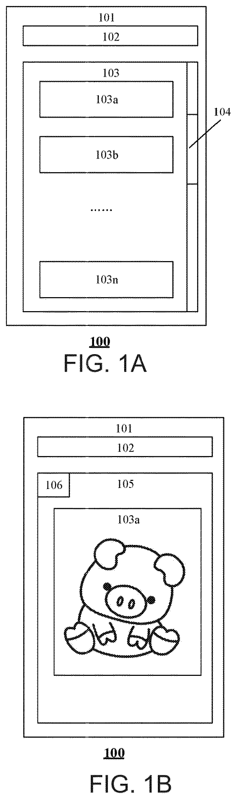

In related video search solutions, search results are generally displayed on a display interface based on search information entered by a user. As shown in FIG. 1A, it shows a schematic diagram of search results of a video search. In FIG. 1A, a portrait display interface 101 of a terminal device 100 has a search area 102, and the user generally enters a keyword, such as "piggy", in the search area 102 to search for video information about "piggy". The terminal device 100 displays at least part of videos 103a, 103b, ... 103n searched about "piggy" as search results in a result area 103 below the search area 102 for selection by the user.

It should be understood that the videos 103a, 103b, ... 103n may represent all the search results or part of the search results. When the videos 103a, 103b, ... 103n represent part of the search results, the display of other search results can be controlled by a preset user operation. The display of the search results in the result area 103 is controlled, for example, with a slider 104 or by directly sliding on the result area 103. The user may select a video in the search results. For example, the user clicks on the video 103a in the result area 103, and then enters the playing page of the video 103a.

As shown in FIG. 1B, it shows a schematic diagram of a video playing page. In FIG. 1B, the content of the video 103a is played in a playing area 105 below the search area 102 on the portrait display interface 101 of the terminal device 100. At this time, other search results, such as videos 103b, ... 103n, are no longer displayed on the portrait display interface 101. When the user wants to watch other videos, he or she needs to click a return control 106 to return to the interface in FIG. 1A, and then click the video to be watched again in the search results.

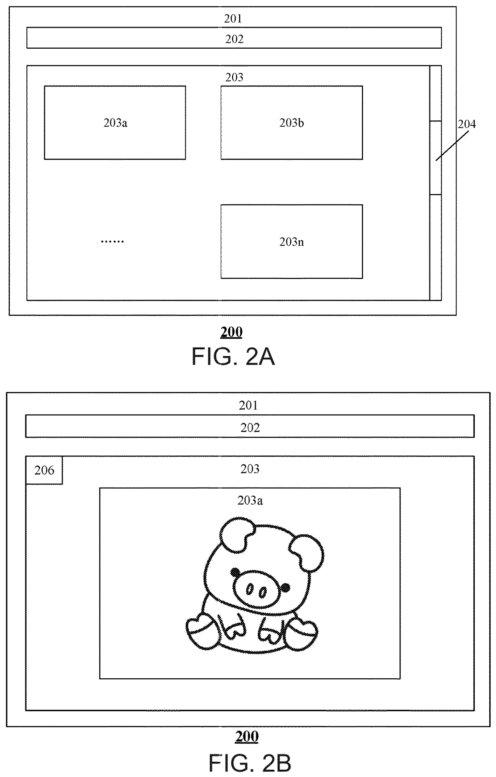

The same problem occurs when the terminal device 100 performs landscape display, as shown in FIG. 2A and FIG. 2B. In FIG. 2A, search results, such as videos 203a, 203b ... 203n, are displayed on a landscape display interface 201 of a terminal device 200, and 204 is a slider. After the user selects the video 203a, he or she enters the interface shown in FIG. 2B. In FIG. 2B, also only the video 203a selected by the user is played without displaying other search results. If the user wants to watch other search results, he or she must return to the interface shown in FIG. 2A through a return control 206 to make a new selection. Repeating the operations so frequently not only reduces the efficiency of watching search results by the user, but also results in poor continuity of the user's video consumption and reduces user experience. Therefore, how to maintain the continuity of watching videos by the user has become a technical problem that needs to be solved urgently.

Based on the above considerations, according to embodiments of the present disclosure, there provided a video search method and apparatus, a device, a storage medium and a program product, which , by performing operation for a first area that displays a first video in the search results to switch to a second video in the search results to play in the first area, achieves the effect that other search results can be watched without the need for exiting the current playing interface, thereby improving the continuity and efficiency of watching videos by the user, and enhancing the user's video consumption experience.

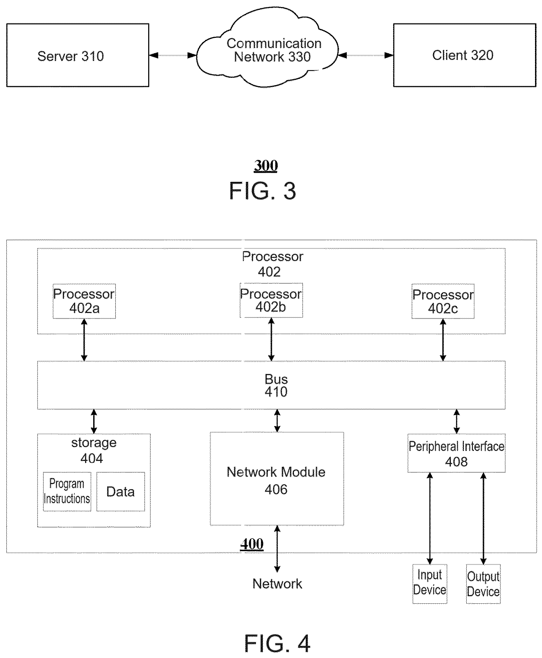

FIG. 3 shows a schematic diagram of a video search architecture according to an embodiment of the present disclosure. Referring to FIG. 3, the video search architecture 300 may comprise a server 310, a client 320, and a communication network 330 providing a communication link. The server 310 and the client 320 may be connected via a wired or wireless communication network 330. The server 310 may be an independent physical server, may be a server cluster formed by a plurality of physical servers, or a distributed system, and may also be a cloud server that provides basic cloud computing services such as cloud services, cloud databases, cloud computing, cloud functions, cloud storage, network services, cloud communication, middleware services, domain name services, security services, CDN, as well as big data and artificial intelligence platforms.

The client 320 may be implemented in hardware or software. For example, when implemented in hardware, the client 320 may be a variety of electronic devices having a display screen and supporting page display, including but not limited to smart phones, tablet computers, e-book readers, laptop portable computers, desktop computers, and the like. When implemented in software, the client 320 device may be installed in the electronic devices listed above; it may be implemented as a plurality of software or software modules (e.g., software or software modules for providing distributed services), or may be implemented as a single software or software module, which is not specifically limited herein.

It should be noted that the video search method provided in the embodiment of the present application may be performed by the client 320, the client 320 may send a video search request to the server 310 and acquire video search results and corresponding video data to be locally played at the client 320. It should be understood that the number of clients, networks, and servers in FIG. 1 is illustrative only and not intended to be limiting. There may be any number of clients, networks, and servers as required by the implementation.

FIG. 4 shows a schematic hardware structure diagram of an exemplary electronic device 400 provided in an embodiment of the present disclosure. As shown in FIG. 4, the electronic device 400 may comprise a processor 402, a storage 404, a network module 406, a peripheral interface 408, and a bus 410, wherein the processor 402, the storage 404, the network module 406 and the peripheral interface 408 are communicatively connected to each other inside the electronic device 400 via the bus 410.

The processor 402 may be a Central Processing Unit (CPU), an image processor, a Neural Network Processor (NPU), a microcontroller (MCU), a programmable logic device, a Digital Signal Processor (DSP), an Application Specific Integrated Circuit (ASIC), or one or more integrated circuits. The processor 402 may be used to perform functions related to the techniques described in the present disclosure. In some embodiments, the processor 402 may also include a plurality of processors integrated into a single logical component. For example, as shown in FIG. 4, the processor 402 may include a plurality of processors 402a, 402b, and 402c.

The storage 404 may be configured to store data (e.g., instructions, computer code, etc.. As shown in FIG. 4, the data stored in the storage 404 may include program instructions (e.g., program instructions for implementing a prediction confidence assessment method of a model in the embodiment of the present disclosure) and data to be processed (for example, the storage may store configuration files of other modules, etc.). The processor 402 may also access the program instructions and data stored in the storage 404 and execute the program instructions to operate the data to be processed. The storage 404 may include a volatile storage or a non-volatile storage. In some embodiments, the storage 404 may include random access memory (RAM), read-only memory (ROM), an optical disk, a magnetic disk, a hard disk, a solid-state drive (SSD), flash memory, a memory stick, etc.

The network module 406 may be configured to provide the electronic device 400 with communication with other external devices via a network. The network may be any wired or wireless network capable of transmitting and receiving data. For example, the network may be a wired network, a local wireless network (e.g., Bluetooth, WiFi, Near Field Communication (NFC), etc.), a cellular network, the Internet, or a combination thereof. It is to be understood that the type of the network is not limited to the above specific examples. In some embodiments, the network module 106 may include any combinations of any number of network interface controllers (NICs), radio frequency modules, transceivers, modems, routers, gateways, adapters, cellular network chips, etc.

The peripheral interface 408 may be configured to connect the electronic device 400 to one or more peripheral devices to enable input and output of information. For example, the peripheral devices may include input devices such as a keyboard, a mouse, a touch pad, a touch screen, a microphone, and various sensors, and output devices such as a display, a speaker, a vibrator, and an indicator light.

The bus 410 may be configured to transmit information between various components of the electronic device 400 (e.g., the processor 402, the storage 404, the network module 406, and the peripheral interface 408), such as an internal bus (e.g., a processor-memory bus), and an external bus (a USB port, a PCI-E bus), etc..

It should be noted that although the architecture of the electronic device 400 described above only shows the processor 402, the storage 404, the network module 406, the peripheral interface 408 and the bus 410, in the specific implementation process, the architecture of the electronic device 400 may also comprise other components necessary for normal operation. In addition, those skilled in the art may understand that the architecture of the electronic device 400 may only include components necessary to implement the embodiments of the present disclosure, and does not necessarily include all the components shown in the figure.

The video search method provided in the embodiment of the present disclosure can be applied to either a portrait display scenario or a landscape display scenario, and landscape display is more in line with the user's habit of use. The landscape display may refer to taking a screen of a terminal as a reference plane, in which a horizontal length of the display interface is greater than a vertical length thereof. Therefore, in the landscape display, the video being played and the search results can be displayed side by side on the screen to ensure that the video playing area will not be compressed while displaying the search results, and it is more convenient for the user to operate the playing area and the search result area separately. Below, the video search method of the embodiment of the present disclosure will be specifically described with reference to the landscape display scenario.

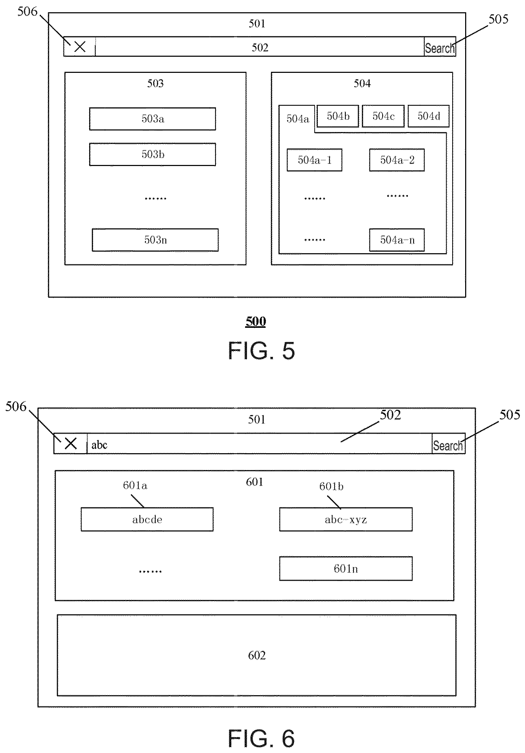

When searching for videos, the user may enter video search information in an initial search interface shown in FIG. 5 to perform the search. FIG. 5 shows a schematic diagram of an initial search interface according to an embodiment of the present disclosure. In FIG. 5, when a terminal device 500 performs landscape display, the initial search interface 501 includes a search area 502, a historical search area 503, and a guess search area 504.

The user may enter in the search area 502 video search information he or she wants to search for, which may be, for example, a character in the video, a song, and other information related to the video. The user may operate a search control 505, such as clicking the search control 505, to search for related videos. The user may also operate an exit control 506, such as clicking the exit control 506, to exit the search or remove the video search information entered in the search area 502.

In the historical search area 503, historical video search information 503a, 503b, ... 503n that the user previously searched may be displayed. The user may directly operate the historical video search information 503a, 503b, ... 503n and make a further search, so that the user can quickly search the searched information.

In the guess search area 504, one tag or a plurality of tags 504a, 504b, 504c, and 504d may be displayed. Each tag may correspond to a plurality of pieces of recommended search information, for example, tags 504a, 504b, 504c, and 504d may correspond to "Guess what you want to search for", "TV series", "Movies", and "Popular authors", respectively. The tag 504a may correspond to a plurality of pieces of recommended search information 504a-1, 504a-2, ... 504a-n, which may be the search information with the currently highest popularity (or the highest search rate), or may be the search information recommended based on the user's historical search data. Similarly, tags 504b, 504c, and 504d may also correspond to a plurality of pieces of search information for the user to perform a quick search.

The present disclosure enhances the landscape interaction experience, makes it convenient for the user to efficiently switch between videos according to search results when watching the videos in a landscape mode, and causes the user to have an anticipation of the corresponding video after switching, thereby improving user experience.

When the user enters video search information in the search area 502, search information including the text currently entered by the user may be displayed below the search area 502, as shown in FIG. 6. FIG. 6 shows a schematic diagram of an input interface of video search information according to an embodiment of the present disclosure.

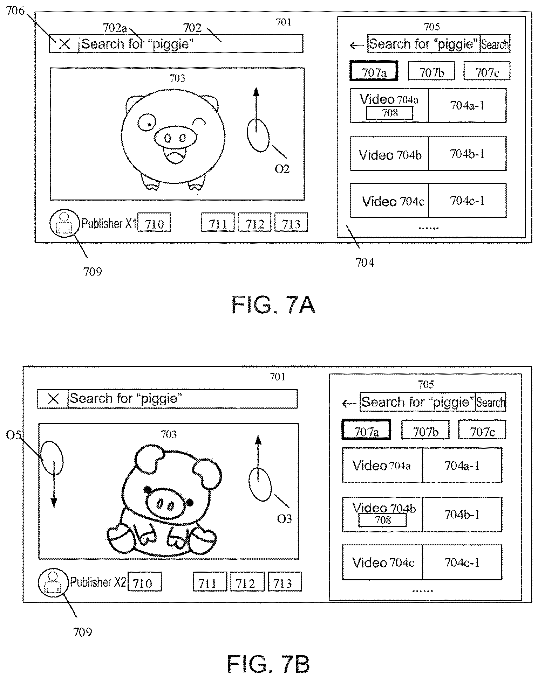

In FIG. 6, the user enters "abc" in the search area 502, and then search information 601a including "abc", such as "abcde", search information 601b, such as "abc-xyz", ..., and search information 601n appear in an area 601 below the search area 502 for the user to select for quick operation. In some embodiments, the terminal device is a smartphone, an IPAD, or the like without an input device such as an input keyboard, and a soft keyboard may be displayed in an area 602 below the area 601 for the user to enter video search information. In some embodiments, the terminal device is a laptop portable computer, a desktop computer, or the like with an input device such as an input keyboard, and a soft keyboard may be displayed in the area 602 below the area 601, and the area 602 may not be displayed. After the user enters the video search information in the search area 601, the user clicks the search control 505, entering a first display page 701 as shown in FIG. 7A. The user may also click the exit control 506, returning to the initial search interface 501 shown in FIG. 5.

FIG. 7A shows a schematic diagram of a search result interface according to an embodiment of the present disclosure. In FIG. 7A, on the first display interface 701, video search information 702a being currently searched for may be displayed in a search area 702, for example, Search for "piggy" is displayed in the search area 702, which indicates that the current first display interface is video search results about the video search information 702a "piggy". The terminal device 700 acquires a first search result 704 about the video search information 702a from the server side(e.g., the server 310 in FIG. 3). The first search result 704 may include a plurality of videos 704a, 704b, 704c, ... ranked in a first order, wherein video 704a is the video ranked first; video 704b is located at a next ranked position from video 704a; video 704c is located at a next ranked position from video 704b, that is, video 704b is located at a previous ranked position from video 704c, and so on.

In some embodiments, an exit control 706 is also displayed on the first display interface 701. The user may perform operation O1 for the exit control 706 to exit the video search, returning to the initial search interface 501 shown in FIG. 5.

In some embodiments, a first area 703 is provided on the left side of the first display interface 701. In some embodiments, a second area 705 is provided on the right side of the first display interface 701.

In some embodiments, the terminal device acquires the first search result 704 about the video search information 702a, and may automatically play the video 704a ranked first in the first search result in the first area 703. Further, in some embodiments, the videos 704a, 704b, 704c, ... may be played in the first area 703 in the first order. In this way, after the user performs a search, the search results, while being displayed, are automatically played in the ranking order of the search results without user operation, so that the user feels it convenient to watch the video results quickly and has an anticipation of the next video to be played, thereby further improving the user experience.

In some embodiments, the terminal device may display the first search result 704 in the second area 705. Further, in some embodiments, when displaying the plurality of videos 704a, 704b, 704c, ... in the first search result 704, video information 704a-1, 704b-1, 704c-1, ... of the respective videos may also be displayed correspondingly, such as the title, description, tags (e.g., system recommended tags or custom tags) of the videos, etc.. Furthermore, in some embodiments, the video search information 702a may be highlighted in the video information 704a-1, 704b-1, 704c-1, ... as well.

In some embodiments, the second area 705 further includes a plurality of attribute tags 707a, 707b, and 707c, each of which may indicate a different attribute, such as a "general" tag, a " movie & TV " tag, and a "user" tag. Based on the plurality of tags, search results about video search information may be sorted or filtered according to different attributes, and presented in different orders (for example, they may be arranged according to the attributes or a degree of relevance to the video search information). In some embodiments, the tag 707a may be set as a default tag, that is, the search results about the video search information are arranged in a first order based on the attribute indicated by the tag 707a by default, to form the first search result 704. In some embodiments, the search results may be determined to be arranged in the first order based on the tag 707a. In some embodiments, the search results may be determined to be arranged in a second order based on the tag 707b. In some embodiments, the search results may be determined to be arranged in a third order based on the tag 707c.

In some embodiments, the tag 707a may be a "general" tag, which indicates that when the tag 707a is selected, search results about video search information are arranged according to general ranking. In some embodiments, the tag 707b may be a "movie & TV" tag, which indicates that when the tag 707b is selected, videos of the movie & TV type in the search results about the video search information are arranged in the second order. In some embodiments, the tag 707c may be a "user" tag, which indicates that when the tag 707c is selected, the search results about the video search information are sorted by user and arranged in the third order. It should be understood that the video search method in the embodiment of the present disclosure is not limited by how the search results are arranged based on different tags. The specific implementation algorithm for arranging the search results based on different tags is not limited here.

In some embodiments, corresponding to the video 704a being played in the first area 703, a display status tag 708 may be displayed in an icon of the displayed video 704a in the second area 705, to indicate that the video 704a is in a playing state, that is, the video 704a is being played in the first area 703. It should be understood that the display status tag 708 may also be set at any position in the second area 705, which is not limited here.

According to an embodiment of the present disclosure, the user may directly operate the first area 703 to switch between videos in the first search result to play, without exiting the current display interface and returning to the search result page shown in FIGS. 1A and 1B to make a new selection as in the method shown in FIGS. 1B and 2B, thereby ensuring the continuity of watching videos by the user. The user may perform operation O2 for the first area 703 to switch the playing of the video. For example, the operation O2 may be slide-up in the first area 703, and then the video played in the first area 703 is switched from the video 704a to the next video 704b adjacent thereto, as shown in FIG. 7B. FIG. 7B shows a schematic diagram of video switching according to an embodiment of the present disclosure.

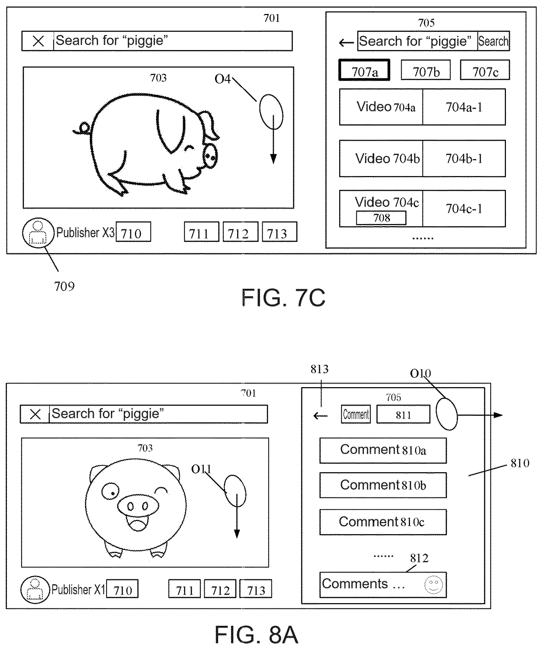

In FIG. 7B, the video 704b is played in the first area 703. Correspondingly, the display status tag 708 is displayed in the icon of the video 704b in the second area 705 to indicate that the video 704b is being played in the first area 703. The user may perform operation O3 for the first area 703 in FIG. 7B to switch to the video 704c to play, wherein the operation O3 may be slide-up in the first area 703, and then the video played in the first area 703 in FIG. 7B is switched from video 704b to the next video 704c adjacent thereto, as shown in FIG. 7C. FIG. 7C shows a schematic diagram of video switching according to an embodiment of the present disclosure.

In FIG. 7C , the video 704c is played in the first area 703. Correspondingly, the display status tag 708 is displayed in an icon of the video 704c in the second area 705 to indicate that the video 704c is being played in the first area 703. The user may perform operation O4 for the first area 703 in FIG. 7C to switch to the previous video 704b to play. The operation O4 may be slide-down in the first area 703, and then the video played in the first area 703 in FIG. 7C is switched from the video 704c to the previous video 704b adjacent thereto, as shown in FIG. 7B.

Similarly, the user may perform operation O5 for the first area 703 in FIG. 7B to switch to the previous video 704a to play. The operation O5 may be slide-down in the first area 703, and then the video played in the first area 703 in FIG. 7B is switched from the video 704b to the previous video 704a adjacent thereto, as shown in FIG. 7A.

The video switching shown in FIG. 7A to FIG. 7C may be performed not only by user operation but also automatically. For example, after playing of a video is finished, the next video is automatically played, and the display before and after the switching is the same as the display before and after the switching based on the user operation in the foregoing embodiment. Correspondingly, in response to the switching of the video being played, the video corresponding to the display status tag is switched accordingly.

It can be seen that according to an embodiment of the present disclosure, the videos in the search results are played while the search results are displayed on the same display interface, and by sliding up and down the video being played, the videos in the search results are switched to play. The present disclosure improves the continuity and efficiency of watching videos by the user and allows the user to anticipate the video that is about to be played; at the same time, it reduces the user's repeated operations and enhances the user's video consumption experience.

In some embodiments, a publisher tag 709 may also be displayed on the first display interface 701 in FIGS. 7A-7C. Further, in some embodiments, the publisher tag 709 is located below the first area 703 (or may be located in any direction of the first area). The publisher tag 709 may indicate a publisher of the video being currently played in the first area 703. For example, the publisher tag 709 in FIG. 7A indicates the publisher X1 of the video 704a, the publisher tag 709 in FIG. 7B indicates the publisher X2 of the video 704b, and the publisher tag 709 in FIG. 7C indicates the publisher X3 of the video 704c. Furthermore, in some embodiments, the name or ID of the publisher is displayed corresponding to the publisher tag 709, such as "Publisher X1" in FIG. 7A, "Publisher X2" in FIG. 7B, and "Publisher X3" in FIG. 7C.

In some embodiments, a follow control 710 may also be displayed on the first display interface 701. Further, in some embodiments, the user may follow a publisher based on operation O6 for the follow control 710, such as clicking the follow control 710.

In some embodiments, a like control 711 may also be displayed on the first display interface 701. Further, in some embodiments, the user may like the video 704a being played in the first area 703 based on operation O7 for the like control 711, such as clicking the like control 711.

In some embodiments, a comment control 712 may also be displayed on the first display interface 701. Further, in some embodiments, the user may comment on the video 704a being played in the first area 703 or view other users' comments on the video 704a based on operation O8 for the comment control 712, such as clicking the comment control 712. As shown in FIG. 8A, FIG. 8A shows a schematic diagram of a comment interface according to an embodiment of the present disclosure.

In FIG. 8A, after the user clicks the comment control 712 in FIG. 7A , comment information 810 pops up or slides out to the left on the right side of the first display interface 701 to switch the first search result 704 in the second area 705 to the comment information 810. At this time, the second area 705 may display comments 810a, 810b, 810c, ... on the video 704a played in the first area 703. Each comment may include information such as the commenting user and his/her specific comment text (which may also include emoticons, symbols, etc.), comment time, etc. Further, in some embodiments, the second area 705 may also display the number of comments 811. Furthermore, in some embodiments, the second area 705 may display a comment area 812 through which the user may comment on the video 704a and then post the comment. In this way, the user can not only watch videos on the current interface, but also make comments or view other users' comments in real time therein, without affecting video watching. This makes full use of the horizontal length advantage of the landscape display interface, enabling the user to consume videos and make comments conveniently and smoothly without switching to other interfaces, thereby ensuring the continuity of watching videos by the user and improving the user experience.

In some embodiments, a return control 813 may also be displayed in the second area 705, and the user may perform operation O9 for the return control 812, such as clicking the return control 813, to return to the first display interface 701 shown in FIG. 7A.

In some embodiments, the user may perform operation O10 for the second area 705, such as sliding from left to right, to switch the comment information 810 in the second area 705 to the first search result 704, i.e., to display the first display interface 701 as shown in FIG. 7A.

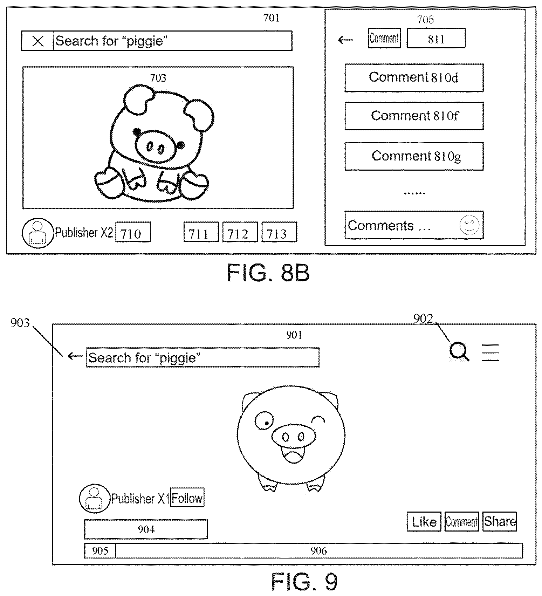

In some embodiments, the comment information 810 displayed in the second area 705 corresponds to the video displayed in the first area 703. For example, the user may perform operation O11 for the first area 703 in FIG. 8A to switch to the next video 704b to play. The operation O11 may be slide-down in the first area 703, and then the video played in the first area 703 in FIG. 8A is switched from the video 704a to the next video 704b adjacent thereto, and the comments in the second area 705 are also correspondingly switched to comments 810d, 810f, 810g, ... on the video 704b (as shown in FIG. 8B). It should be understood that in FIG. 7B , clicking the comment control 712 also causes a third area 810 to appear, which includes comments on the displayed video 704b as shown in FIG. 8B.

It can be seen that when the video played in the first area 703 changes, the corresponding comments displayed in the second area 705 also change accordingly. Therefore, when the video played in the first area 703 is automatically switched or switched by the user to the previous video or the next video, the comments displayed in the second area 705 are changed accordingly. In this way, the consistency and continuity of the videos watched by the user and their related information can be guaranteed without the need for the user to perform more operations, further improving the user's watching efficiency and video consumption experience.

In some embodiments, a share control 713 may also be displayed on the first display interface 701. Further, in some embodiments, the user may share the video being played in the first area 703 based on operation 012 for the share control 713, such as clicking the share control 713.

According to an embodiment of the present disclosure, the user may also perform operation 013 for the first area 703 to achieve full-screen display of the video being played. In some embodiments, the user may perform a preset operation 013 for the first area, such as single-click, double-click, and long press, to perform full-screen display of the video being displayed in the first area 703 on the second display interface 901 as shown in FIG. 9.

FIG. 9 shows a schematic diagram of a full-screen display interface according to an embodiment of the present disclosure. For example, with respect to FIG. 7A , the video 704a is being played in the first area 703, and the user may perform single-click, double-click, or long-press at any position in the first area 703, and then full-screen display as shown in FIG. 9 can be achieved. Similarly, after the operation 013 is performed for the first area 703 in FIGS. 7B and 7C, the video 704b and the video 704c may be full-screen displayed respectively. In this way, the user can quickly enter a full-screen mode to watch videos on the current display interface and return to the current interface, which provides the user with a variety of video watching options and further improves the user's video watching experience.

In some embodiments, a search control 902 and a return control 903 may also be displayed on the second display interface 901. Further, the user may perform operation 014 for the search control 902 or the return control 903, such as clicking the search control 902 or the return control 903, to return to the first display interface 701 as shown in FIG. 7A.

In some embodiments, a video identifier 904 may also be displayed on the second display interface 901 to display video information of the video being currently played (e.g., 704a-1 in FIG. 7A, 704b-1 in FIG. 7B, and 704c-1 in FIG. 7C). In some embodiments, a time tag 905 may also be displayed on the second display interface 901 to display the playing duration and/or total duration of the current video. In some embodiments, a progress tag 906 may also be displayed on the second display interface 901 to display the playing progress of the current video.

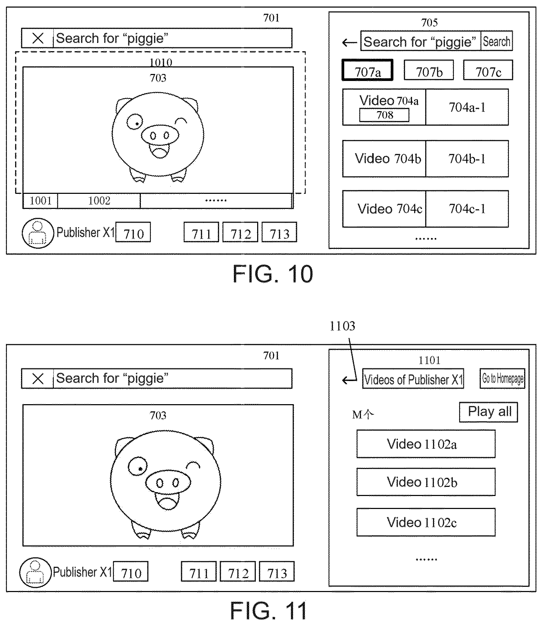

According to an embodiment of the present disclosure, the user may also perform operation 015 for the first area 703 to display a play control. As shown in FIG. 10, FIG. 10 shows a schematic diagram of a play control display interface according to an embodiment of the present disclosure, wherein the operation 015 may include single-click on the first area 703. The user performs the operation 015 in the first area 703 shown in FIG. 7A, and corresponding play controls 1001, 1002, ... are displayed in the first area 703. The play control may be located at any position in the first area 703 and is used to control play parameters of the video in the first area 703, such as playing speed, playing volume, playing progress, and start/pause, etc.. Similarly, after the operation 015 is performed for the first area 703 in FIG. 7B and FIG. 7C , the play controls for the video 704b and the video 704c may be displayed and controlled respectively.

Further, in some embodiments, an operation 016 may also be performed for a non-control area of the first area 703 to achieve full-screen play of the video in the first area 703. The operation O16 may include clicking a non-control area 1010. After the user clicks on the non-control area 1010 in FIG. 10, the video 704a may be full-screen displayed, as shown in FIG. 9. Similarly, after the operation 016 is performed for the non-control area of the first area 703 in FIG. 7B and FIG. 7C, the video 704b and the video 704c may be full-screen displayed, respectively.

In some embodiments, the user may also perform operation 017 for the publisher's identification 709 to display the videos posted by the publisher. The operation 017 may include clicking the publisher's identification 709. For example, the user performs the operation 017 for the publisher's identification 709 shown in FIG. 7A, and then the videos posted by the publisher pop up or slide out on the right side of the first display interface 701, so that the first search result displayed in the second area is switched to the videos posted by the publisher, as shown in FIG. 11. FIG. 11 shows a schematic diagram of a publisher's video interface according to an embodiment of the present disclosure. In FIG. 11, videos 1102a, 1102b, 1102c, ... posted by the publisher X1 are displayed in the second area 705. Similarly, after clicking the publisher tags in FIGS. 7B and 7C, the videos posted by the publishers X2 and X3 of the video 704b and the video 704c may be displayed in the second area 705 respectively.

In some embodiments, when displaying videos posted by a publisher, a return control 1103 may also be displayed in the second area 705, and the user may perform operation 018 for the return control 1103, such as clicking the return control 1103, so that the videos posted by the publisher are switched to the first search result 704, returning to the first display interface 701 shown in FIG. 7A.

In some embodiments, the user may perform operation 019 for the second area 705, such as sliding from left to right, to switch the videos posted by the publisher to the first search result 704, i.e., to display the first display interface 701 as shown in FIG. 7A.

It can be seen that the user can also quickly track relevant information of the video being currently played on the current display interface, providing the user with more interaction content, and without the need for exiting the current display interface and searching for relevant information, that is, the user can quickly obtain the content of the relevant information, thereby further ensuring the continuity of the user's video consumption, and meanwhile, the user is provided with more video related information, thereby further improving the user experience.

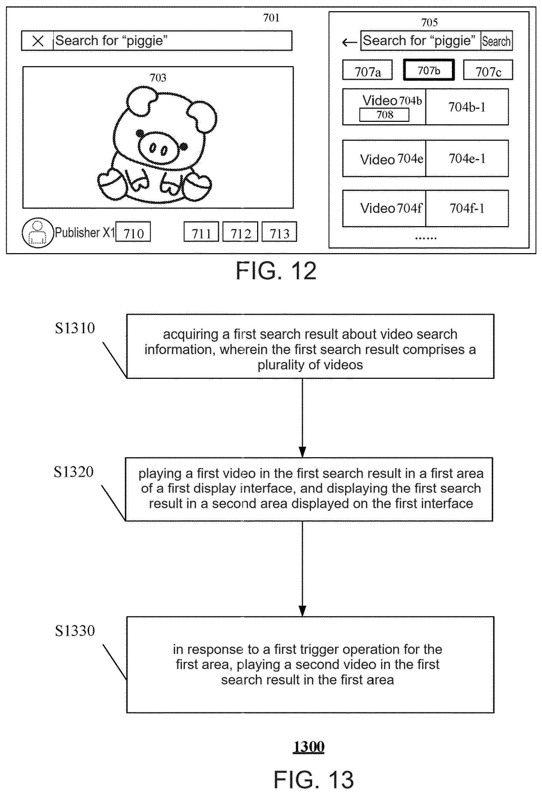

In some embodiments, the user may perform operation O20 for the attribute tag 707b, such as clicking the attribute tag 707b, and the video 704b and its video information 704b-1, the video 704e and its video information 704e-1, the video 704f and its video information 704f-1, ... in the second area 705 are arranged in a second order to form a second search result, as shown in FIG. 12.

FIG. 12 shows a schematic diagram of a second tag display interface according to an embodiment of the present disclosure. In FIG. 12, the video 704b-1 ranked first may still be automatically played in the first area 703. It should be understood that any operations in FIGS. 7A-11 are applicable to the scenario in FIG. 12 and will not be described in detail here. In this way, the user is provided with search results in a variety of orders, so that the user can obtain videos arranged in the orders in which they are more interested by selecting attribute tags in which they are more interested, thereby improving the user's video consumption experience.

It can be seen that, with the video search method according to an embodiment of the present disclosure, the user can smoothly switch between videos, view/post comments, consume the publishers' videos and other relevant information, sort search results according to different attribute tags, etc. in a plurality of interaction ways, based on the advantage of landscape display on the current display page, without affecting the continuity of video watching; without exiting the current display interface, the continuity of video consumption is ensured, and the user is provided with rich video content, improving the continuity and efficiency of watching videos by the user, and letting the user have an anticipation of the video to be played; meanwhile, the user's repeated operations are reduced and the user's video consumption experience is enhanced.

Referring to FIG. 13 , it shows a schematic flow chart of a video search method 1300 according to an embodiment of the present disclosure. As shown in FIG. 13 , the video search method 1300 comprises:
Step S1310, acquiring a first search result (e.g., the first search result 704 in FIGS. 7A-7C) about video search information (e.g., the video search information 702a in FIG. 7A ); wherein the first search result comprises a plurality of videos (e.g., videos 704a, 704b, 704c, ... in FIGS. 7A-7C );
Step S1320, playing a first video (e.g., the video 704a in FIG. 7A, the video 704b in FIG. 7B, and the video 704c in FIG. 7C) in the first search result in the first area (e.g., the first area 703 in FIGS. 7A-7C, FIGS. 8A-8B and FIGS. 10-12) of the first display interface (e.g., the first display interface 701 in FIGS. 7A-7C, FIGS. 8A-8B and FIGS. 10-12), and displaying the first search result in the second area (e.g., the second area 705 in FIGS. 7A-7C, FIGS. 8A-8B and FIGS. 10-12) displayed on the first interface;
Step S1330, in response to a first trigger operation for the first area (e.g., operations O2-O5 in FIGS. 7A-7C), playing a second video in the first search result (e.g., the videos 704a, 704b, 704c in FIGS. 7A-7C) in the first area.

In some embodiments, the second video is located at a ranked position adjacent to the first video.

In some embodiments, the first display interface is a landscape display interface (e.g., the first display interface 701 in FIGS. 7A-7C).

In some embodiments, the first trigger operation includes a slide-up operation (e.g., the operation O2 in FIG. 7A, and the operation O3 in FIG. 7B), and the second video is located at a next ranked position from the first video (e.g., the operation O2 in FIG. 7A, and the operation O3 in FIG. 7B).

In some embodiments, the first trigger operation includes a slide-down operation (e.g., the operation O5 in FIG. 7B, and the operation O4 in FIG. 7C), and the second video is located at a previous ranked position from the first video (e.g., the video 704b is located at the next ranked position of the video 704a; the video 704c is located at the next ranked position of the video 704b, that is, the video 704b is located at the previous ranked position of the video 704c).

In some embodiments, the method 1300 further comprises: indicating in the second area that the second video is in a playing state (e.g., the display status tag 708 in FIGS. 7A-7B).

In some embodiments, playing a first video in the first search result in the first area of the first display interface comprises: automatically playing the video ranked first in the first search result (e.g., the video 704a in FIG. 7A) in the first area.

In some embodiments, the method 1300 further comprises: in response to a second trigger operation for the first area, full-screen playing the first video on a second display interface (e.g., the second display interface 901 in FIG. 9).

In some embodiments, the method 1300 further comprises:
when full-screen playing the first video, displaying a first return control (e.g., the return control 903 in FIG. 9) on the current display interface (e.g., the second display interface 901 in FIG. 9);
in response to a third trigger operation for the first return control (e.g., clicking the return control 903), returning to the first display interface.

In some embodiments, the method 1300 further comprises:
displaying a comment control (e.g., the comment control 712 in FIGS. 7A-7C ) on the first display interface;
in response to a fourth trigger operation for the comment control (e.g., single-click, double-click, long press, etc.), switching the first search result displayed in the second area to first comment information on the first video (e.g., comments 810a, 810b and 810c in FIG. 8A).

In some embodiments, the method 1300 further comprises: in response to the first trigger operation, switching the first comment information displayed in the second area (e.g., the comments 810a, 810b, 810c in FIG. 8A) to second comment information on the second video (e.g., the comments 810d, 810f, 810g in FIG. 8B).

In some embodiments, the method 1300 further comprises:
displaying an identification of a publisher for the first video on the first display interface (e.g., the identification 709 of the publisher in FIGS. 7A-7C);
in response to a fourth trigger operation for the identification of the publisher (e.g., single-click, double-click, long press, etc.), switching the first search result displayed in the second area to videos posted by the publisher (e.g., the videos 1102a, 1102b, 1102c, ... in FIG. 11).

In some embodiments, the method 1300 further comprises:
displaying a first attribute tag (e.g., attribute tags 707a, 707b, 707c in FIG. 12) and a second attribute tag (e.g., attribute tags 707a, 707b, 707c in FIG. 12) in the second area; wherein the first search result has a first order determined based on the first attribute tag;
in response to a fifth trigger operation (e.g., click) for the second attribute tag, displaying a second search result (e.g., videos 704b, 704e, 704f in FIG. 12) about the video search information in the second area; wherein the second search result includes a plurality of videos having a second order (e.g., videos 704b, 704e, 704f in FIG. 12), and the second order is determined based on the second attribute tag (e.g., attribute tags 707a, 707b, 707c in FIG. 12) ;
and playing a third video in the second search result in the first area (e.g., videos 704b, 704e, 704f in FIG. 12).

The embodiment of the method 1300 of the above embodiment may have the beneficial effects of the corresponding embodiment of the aforementioned video search method, which will not be described in detail here.

It is to be noted that the method of the embodiment of the present disclosure may be executed by a single device, such as a computer or a server. The method of this embodiment may also be applied in a distributed scenario and completed by a plurality of devices in cooperation with each other. In the case of such a distributed scenario, one of the plurality of devices may execute only one or more steps in the method of the embodiment of the present disclosure, and the plurality of devices may interact with each other to complete the method.

It is to be noted that some embodiments of the present disclosure are described above. Other embodiments are within the scope of the appended claims. In some cases, the actions or steps recited in the claims may be performed in an order different from that in the above-described embodiments and still achieve desirable results. In addition, the processes depicted in the accompanying drawings do not necessarily require the particular order shown, or sequential order, to achieve desirable results. In certain implementations, multitasking and parallel processing are also possible or may be advantageous.

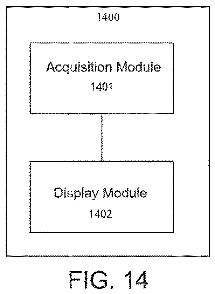

Based on the same inventive concept, corresponding to the method of any of the embodiments described above, the present disclosure further provides a video search apparatus. FIG. 14 shows a schematic structural diagram of an exemplary apparatus 1400 provided in an embodiment of the present disclosure.

Referring to FIG. 14 , the video search apparatus 1400 may comprise an acquisition module 1401 and a display module 1402.

The acquisition module 1401 is configured to acquire a first search result about video search information, wherein the first search result comprises a plurality of videos.

The display module 1402 is configured to play a first video in the first search result in a first area of a first display interface, and to display the first search result in a second area displayed on the first interface; and to play a second video in the first area in response to a first trigger operation for the first area.

For the convenience of description, the above apparatus is described as being divided into various modules by functions, which are described separately. Of course, when implementing the present disclosure, the functions of respective modules may be implemented in the same one or more pieces of software and/or hardware.

The apparatus of the above embodiment is configured to implement the corresponding video search method in any of the foregoing embodiments, and has the beneficial effects of the corresponding method embodiment, which will not be described in detail here.

Based on the same inventive concept, corresponding to the method of any of the above embodiments, the present disclosure further provides a non-transitory computer-readable storage medium, which stores computer instructions for causing the computer to execute the video search method described in any of the above embodiments.

The computer readable medium of this embodiment includes both permanent and non-permanent, removable and non-removable media. The storage medium may implement information storage by any method or technology, and the information may be computer readable instructions, data structures, program modules or other data. Examples of the computer storage medium include, but are not limited to, phase change memory (PRAM), Static Random Access Memory (SRAM), Dynamic Random Access Memory (DRAM), other types of Random Access Memory (RAM), Read Only Memory (ROM), Electrically Erasable Programmable Read Only Memory (EEPROM), flash memory or other memory technology, compact disc read only memory (CD-ROM), Digital Versatile Disk (DVD) or other optical storage, magnetic cassettes, magnetic tape or disk storage or other magnetic storage devices, or any other non-transmission medium, which can be used to store information that can be accessed by a computing device.

The computer instructions stored on the storage medium of the above embodiment are used to cause the computer to execute the video search method described in any of the above embodiments, and have the beneficial effects of the corresponding method embodiments, which will not be repeated here.

Based on the same inventive concept, corresponding to the video search method of any of the above embodiments, the present disclosure further provides a computer program product, which comprises a computer program. In some embodiments, the computer program is executable by one or more processors to cause the processor(s) to perform the video search method. Corresponding to the execution entity that corresponds to each step of the video search method in the embodiments of the present disclosure, the processor that executes the corresponding step may belong to the corresponding execution entity.

The computer program product of the above embodiment is configured to cause the processor(s) to perform the video search method described in any of the above embodiments, and has the beneficial effects of the corresponding method embodiments, which will not be repeated here.

From the above, it can be seen that the video search method and apparatus, device, storage medium, and program product provided by the present disclosure, by performing operation for the first area in which the first video in the search results is displayed and switching to the second video in the search results to play in the first area, achieves the effect that other search results can be viewed without exiting the current play interface, thereby improving the continuity and efficiency of watching videos by the user, and enhancing the user's video consumption experience.

Based on the concept of the present disclosure, the technical features in the above embodiments or different embodiments may be combined, the steps may be implemented in any order, and there are many other variations of the different aspects of the embodiments of the present disclosure as described above, which are not provided in detail for the sake of simplicity.

In addition, well-known power/ground connections to integrated circuit (IC) chips and other components may or may not be shown within the provided figures, to simplify illustration and discussion, and so as not to obscure the disclosed embodiments. Further, the devices may be shown in the form of block diagrams in order to avoid obscuring the embodiments of the present disclosure, and this also takes into account the fact that details regarding the implementation of these block diagram devices are highly dependent on the platform on which the embodiments of the present disclosure are to be implemented (i.e., these details should be fully within the scope of understanding of those skilled in the art) . Where specific details (e.g., circuits) are set forth to describe exemplary embodiments of the present disclosure, it will be apparent to one skilled in the art that the embodiments of the present disclosure may be implemented without, or with variations of, these specific details. Accordingly, the description is to be regarded as illustrative rather than restrictive.

While the present disclosure has been described in conjunction with specific embodiments thereof, many alternatives, modifications and variations of these embodiments will be apparent to those skilled in the art in light of the foregoing description. For example, other memory architectures, such as dynamic RAM (DRAM), may use the discussed embodiments.

The embodiments of the present disclosure are intended to embrace all such alternatives, modifications and variations that fall within the broad scope of the appended claims.

## Claims

1. A video search method, comprising:
acquiring (s1310) a first search result about video search information, wherein the first search result comprises a plurality of videos;
playing (s1320) a first video in the first search result in a first area of a first display interface, and displaying the first search result in a second area displayed on the first interface,
**characterized in that** the videos in the first search result are automatically played in the first area sequentially; and
in response to a first trigger operation for the first area, playing (s1330) a second video in the first search result in the first area, wherein the second video is a video in the plurality of videos that is adjacent to the first video.

2. The video search method according to claim 1, wherein the first display interface is a landscape display interface, the first trigger operation includes a slide-up operation, and the second video is located at a next ranked position from the first video;
or,
the first trigger operation includes a slide-down operation, and the second video is located at a previous ranked position from the first video.

3. The video search method according to claim 1, further comprising: indicating in the second area that the second video is in a playing state.

4. The video search method according to claim 1, wherein playing a first video in the first search result in a first area of a first display interface comprises:
automatically playing the video ranked first in the first search result in the first area.

5. The video search method according to claim 1, further comprising: in response to a second trigger operation for the first area, full-screen playing the first video on a second display interface.

6. The video search method according to claim 5, further comprising: when the first video is full-screen played, displaying a first return control on the current display interface; and
in response to a third trigger operation for the first return control, returning to the first display interface.

7. The video search method according to claim 1, further comprising: displaying a comment control on the first display interface;
in response to a fourth trigger operation for the comment control, switching the first search result displayed in the second area to first comment information on the first video.

8. The video search method according to claim 7, further comprising: in response to the first trigger operation, switching the first comment information displayed in the second area to second comment information on the second video.

9. The video search method according to claim 1, further comprising: displaying an identification of a publisher for the first video on the first display interface; and
in response to a fifth trigger operation for the identification of the publisher, switching the first search result displayed in the second area to a video posted by the publisher.

10. The video search method according to claim 1, further comprising:
displaying a first attribute tag and a second attribute tag in the second area; wherein the first search result has a first order determined based on the first attribute tag;
in response to a sixth trigger operation for the second attribute tag,
displaying a second search result about the video search information in the second area; wherein the second search result comprises a plurality of videos having a second order, and the second order is determined based on the second attribute tag; and
playing a third video in the second search result in the first area.

11. An electronic device, comprising a memory, a processor, and a computer program stored in the memory and executable by the processor, wherein the processor, when executing the program, implements the video search method of any one of claims 1 to 10, in conjunction with a display.

12. A non-transitory computer-readable storage medium, wherein the non-transitory computer-readable storage medium stores computer instructions for causing a computer to perform the video search method of any one of claims 1 to 10.

13. A computer program product, comprising computer program instructions which, when executed by a computer, cause the computer to perform the video search method of any one of claims 1 to 10.

## Patentansprüche

1. Videosuchverfahren, umfassend:
Beziehen (s1310) eines ersten Suchergebnisses zu Videosuchinformationen, wobei das erste Suchergebnis mehrere Videos umfasst;
Wiedergeben (s1320) eines ersten Videos im ersten Suchergebnis in einem ersten Bereich einer ersten Anzeigeoberfläche und Anzeigen des ersten Suchergebnisses in einem zweiten Bereich, der auf der ersten Benutzeroberfläche angezeigt wird, **dadurch gekennzeichnet, dass** die Videos im ersten Suchergebnis automatisch nacheinander im ersten Bereich abgespielt werden;
und
als Reaktion auf eine erste Auslöseoperation für den ersten Bereich, Wiedergeben (s1330) eines zweiten Videos im ersten Suchergebnis im ersten Bereich, wobei es sich bei dem zweiten Video um ein Video der mehreren Videos handelt, das an das erste Video angrenzt.

2. Videosuchverfahren nach Anspruch 1, wobei die erste Anzeigeoberfläche eine Querformat-Anzeigeoberfläche ist, die erste Auslöseoperation eine Hochwischoperation beinhaltet und sich das zweite Video an einer nächsten Rangposition von dem ersten Video befindet;
oder
die erste Auslöseoperation eine Hinunterwischoperation beinhaltet und sich das zweite Video an einer vorherigen Rangposition von dem ersten Video befindet.

3. Videosuchverfahren nach Anspruch 1, ferner umfassend: Anzeigen im zweiten Bereich, dass sich das zweite Video in einem Wiedergabezustand befindet.

4. Videosuchverfahren nach Anspruch 1, wobei Wiedergeben eines ersten Videos im ersten Suchergebnis in einem ersten Bereich einer ersten Anzeigeoberfläche Folgendes umfasst:
automatisches Wiedergeben des Videos, das im ersten Suchergebnis im ersten Bereich an erster Stelle steht.

5. Videosuchverfahren nach Anspruch 1, das ferner Folgendes umfasst: als Reaktion auf eine zweite Auslöseoperation für den ersten Bereich, Wiedergeben des ersten Videos auf einer zweiten Anzeigeoberfläche im Vollbild.

6. Videosuchverfahren nach Anspruch 5, das ferner Folgendes umfasst: wenn das erste Video im Vollbild wiedergegeben wird, Anzeigen einer ersten Rückkehrsteuerung auf der aktuellen Anzeigeoberfläche; und
als Reaktion auf eine dritte Auslöseoperation für die erste Rückkehrsteuerung, Zurückkehren zur ersten Anzeigeoberfläche.

7. Videosuchverfahren nach Anspruch 1, das ferner Folgendes umfasst: Anzeigen einer ersten Kommentarsteuerung auf der ersten Anzeigeoberfläche;
als Reaktion auf eine vierte Auslöseoperation für die Kommentarsteuerung, Umschalten des ersten Suchergebnisses, das im zweiten Bereich angezeigt wird, zu erster Kommentarinformation zum ersten Video.

8. Videosuchverfahren nach Anspruch 7, das ferner Folgendes umfasst: als Reaktion auf die erste Auslöseoperation, Umschalten der ersten Kommentarinformation, die im zweiten Bereich angezeigt wird, zu zweiter Kommentarinformation zum zweiten Video.

9. Videosuchverfahren nach Anspruch 1, das ferner Folgendes umfasst: Anzeigen einer Kennung eines Veröffentlichers des ersten Videos auf der ersten Anzeigeoberfläche; und
als Reaktion auf eine fünfte Auslöseoperation zur Identifizierung des Veröffentlichers, Umschalten des ersten Suchergebnisses, das im zweiten Bereich angezeigt wird, zu einem Video, das von dem Veröffentlicher verfasst wurde.

10. Videosuchverfahren nach Anspruch 1, ferner umfassend:
Anzeigen eines ersten Attributetiketts und eines zweiten Attributetiketts im zweiten Bereich; wobei das erste Suchergebnis eine erste Reihenfolge aufweist, die auf dem ersten Attributetikett basiert;
als Reaktion auf eine sechste Auslöseoperation für das zweite Attributetikett,
Anzeigen eines zweiten Suchergebnisses zu den Videosuchinformationen im zweiten Bereich; wobei das zweite Suchergebnis mehrere Videos zweiter Ordnung umfasst und die zweite Ordnung basierend auf dem zweiten Attributetikett bestimmt wird; und
Wiedergeben eines dritten Videos in dem zweiten Suchergebnis im ersten Bereich.

11. Elektronische Vorrichtung, umfassend einen Speicher, einen Prozessor und ein im Speicher gespeichertes und vom Prozessor ausführbares Computerprogramm, wobei der Prozessor, wenn er das Programm ausführt, das Videosuchverfahren eines der Ansprüche 1 bis 10 in Verbindung mit einer Anzeige implementiert.

12. Nichtflüchtiges, computerlesbares Speichermedium, wobei das nichtflüchtige, computerlesbare Speichermedium Computeranweisungen speichert, um einen Computer zu veranlassen, das Videosuchverfahren nach einem der Ansprüche 1 bis 10 durchzuführen.

13. Computerprogrammprodukt, das Computerprogrammanweisungen umfasst, die, wenn sie von einem Computer ausgeführt werden, den Computer veranlassen, das Videosuchverfahren nach einem der Ansprüche 1 bis 10 durchzuführen.

## Revendications

1. Procédé de recherche vidéo comprenant :
l'acquisition (s1310) d'un premier résultat de recherche sur des informations de recherche vidéo, dans lequel le premier résultat de recherche comprend une pluralité de vidéos ;
la lecture (s1320) d'une première vidéo dans le premier résultat de recherche dans une première zone d'une première interface d'affichage, et l'affichage du premier résultat de recherche dans une seconde zone affichée sur la première interface, **caractérisé en ce que** les vidéos du premier résultat de recherche sont automatiquement lues dans la première zone de manière séquentielle ;
et
en réponse à une première opération de déclenchement pour la première zone, la lecture (s1330) d'une deuxième vidéo dans le premier résultat de recherche dans la première zone, dans lequel la deuxième vidéo est une vidéo dans la pluralité de vidéos qui est adjacente à la première vidéo.

2. Procédé de recherche vidéo selon la revendication 1, dans lequel la première interface d'affichage est une interface d'affichage paysage, la première opération de déclenchement inclut une opération de glissement vers le haut, et la deuxième vidéo est située dans une position classée suivante par rapport à la première vidéo ;
ou
la première opération de déclenchement inclut une opération de glissement vers le bas, et la deuxième vidéo est située dans une position classée précédente par rapport à la première vidéo.

3. Procédé de recherche vidéo selon la revendication 1, comprenant en outre : l'indication dans la seconde zone que la deuxième vidéo est en cours de lecture.

4. Procédé de recherche vidéo selon la revendication 1, dans lequel la lecture d'une première vidéo dans le premier résultat de recherche dans une première zone d'une première interface d'affichage comprend :
la lecture automatique de la vidéo classée première dans le premier résultat de recherche dans la première zone.

5. Procédé de recherche vidéo selon la revendication 1, comprenant en outre : en réponse à une deuxième opération de déclenchement pour la première zone, la lecture en plein écran de la première vidéo sur une seconde interface d'affichage.

6. Procédé de recherche vidéo selon la revendication 5, comprenant en outre : lorsque la première vidéo est lue en plein écran, l'affichage d'une première commande de retour sur l'interface d'affichage actuelle ; et
en réponse à une troisième opération de déclenchement pour la première commande de retour, le retour à la première interface d'affichage.

7. Procédé de recherche vidéo selon la revendication 1, comprenant en outre : l'affichage d'une commande de commentaire sur la première interface d'affichage ;
en réponse à une quatrième opération de déclenchement pour la commande de commentaire, le passage du premier résultat de recherche affiché dans la seconde zone aux premières informations de commentaire sur la première vidéo.

8. Procédé de recherche vidéo selon la revendication 7, comprenant en outre : en réponse à la première opération de déclenchement, le passage des premières informations de commentaire affichées dans la seconde zone aux secondes informations de commentaire sur la deuxième vidéo.

9. Procédé de recherche vidéo selon la revendication 1, comprenant en outre : l'affichage d'une identification d'un éditeur pour la première vidéo sur la première interface d'affichage ; et
en réponse à une cinquième opération de déclenchement pour l'identification de l'éditeur, le passage du premier résultat de recherche affiché dans la seconde zone à une vidéo publiée par l'éditeur.

10. Procédé de recherche vidéo selon la revendication 1, comprenant en outre :
l'affichage d'une première balise d'attribut et d'une seconde balise d'attribut dans la seconde zone ; dans lequel le premier résultat de recherche présente un premier ordre déterminé en fonction de la première balise d'attribut ;
en réponse à une sixième opération de déclenchement pour la seconde balise d'attribut,
l'affichage d'un second résultat de recherche concernant les informations de recherche vidéo dans la seconde zone ; dans lequel le second résultat de recherche comprend une pluralité de vidéos présentant un second ordre, et le second ordre est déterminé en fonction de la seconde balise d'attribut ; et
la lecture d'une troisième vidéo dans le second résultat de recherche de la première zone.

11. Dispositif électronique comprenant une mémoire, un processeur et un programme informatique stocké dans la mémoire et exécutable par le processeur, dans lequel le processeur, lors de l'exécution du programme, met en œuvre le procédé de recherche vidéo selon l'une quelconque des revendications 1 conjointement avec un affichage.

12. Support de stockage non transitoire lisible par ordinateur, dans lequel le support de stockage non transitoire lisible par ordinateur stocke des instructions informatiques pour amener un ordinateur à exécuter le procédé de recherche vidéo selon l'une quelconque des revendications 1 à 10.

13. Produit de programme informatique, comprenant des instructions de programme informatique qui, lorsqu'elles sont exécutées par un ordinateur, amènent l'ordinateur à mettre en œuvre le procédé de recherche vidéo selon l'une quelconque des revendications 1 à 10.
